# DEMANDE DE BREVET EUROPEEN

(11) **EP 1 022 891 A1**
(43) Date de publication de la demande: **26.07.2000**
(21) Numéro de dépôt: 00400125.1
(22) Date de dépôt: 18.01.2000
(51) Int. Cl.: H04M 11/04

(54) **Dispositif de transmission de signaux d'alarme**

(30) Priorité: 19.01.1999 FR 9900520
(71) Demandeur: FRANCE TELECOM, 75015 Paris (FR)
(72) Inventeur: Million-Rousseau, Bruno, 69450 Saint Cyr au Mont d'Or (FR); Junker, Christian, 95170 Deuil la Barre (FR)
(74) Mandataire: Moncheny, Michel

(57) **Abrégé**

Ce dispositif de transmission de signaux d'alarme comprend des éléments de circuit de téléphonie filaire (14) adaptés pour l'établissement d'une liaison téléphonique avec un correspondant par l'intermédiaire d'un réseau téléphonique filaire (RTC) et des moyens d'émission (22) des signaux d'alarme vers le correspondant sur la ligne téléphonique établie. Il comporte en outre des moyens (26, 28, 30, 32) de télécommunication sans fil et des moyens (16) de pilotage de l'actionnement desdits moyens (26, 28, 30, 32) de télécommunication sans fil en cas de défaut de raccordement du dispositif au réseau téléphonique filaire, en vue de l'envoi des signaux d'alarme vers le correspondant.

## Description

La présente invention est relative à un dispositif de transmission de signaux d'alarme pour centrale d'alarme.

Les centrales d'alarme pour locaux professionnels ou pour locaux privés sont généralement dotées d'un dispositif de transmission de signaux d'alarme intégré permettant de signaler, par téléphone, à un ou plusieurs correspondants appelés, le déclenchement d'une alarme, provoquée, par exemple, par une intrusion détectée dans un local surveillé.

Les dispositifs de transmission de signaux d'alarme de ce type comprennent, de façon classique, des éléments de circuit de téléphonie filaire adaptés pour l'établissement d'une liaison téléphonique avec le correspondant par l'intermédiaire d'un réseau téléphonique filaire, à savoir un réseau téléphonique commuté, et des moyens d'émission des signaux d'alarme vers le correspondant sur la ligne téléphonique établie.

Ainsi, dès qu'une alarme est déclenchée, le dispositif compose automatiquement le numéro téléphonique du ou des correspondants stockés en mémoire dans la centrale d'alarme, laquelle provoque l'envoi, vers le correspondant appelé, d'un message prédéterminé stocké sur une puce ou sur une bande magnétique.

Après transmission de ce message, des sons ou des images, délivrés respectivement par des microphones et des dispositifs de prises de vues, peuvent être véhiculés sur la ligne téléphonique pour poursuivre la surveillance du local par une écoute ou une observation à distance de ce dernier.

Ce type de dispositif de transmission de signaux d'alarme présente un inconvénient majeur dans la mesure où son bon fonctionnement est lié à celui de la ligne téléphonique sur lequel il est branché.

Il peut ainsi être relativement aisément déjoué par un cambrioleur, par sectionnement de la ligne téléphonique auquel il est raccordé.

Le but de l'invention est de pallier cet inconvénient.

Elle a donc pour objet un dispositif de transmission de signaux d'alarme du type précité, caractérisé en ce qu'il comporte en outre des moyens de télécommunication sans fil et des moyens de pilotage de l'actionnement desdits moyens de télécommunication sans fil en cas de défaut de raccordement du dispositif au réseau téléphonique flaire, en vue de l'envoi de signaux d'alarme vers le correspondant.

Ainsi, même dans le cas où la ligne téléphonique a préalablement été sectionnée, le dispositif est en mesure de transmettre des signaux d'alarme en utilisant les moyens de télécommunication sans fil.

Le dispositif de transmission de signaux d'alarme suivant l'invention peut en outre comporter une ou plusieurs des caractéristiques suivantes, prises isolément ou selon toutes les combinaisons techniquement possibles:
- les moyens de télécommunication comportent des éléments de circuit de téléphonie sans fil;
- lesdits moyens de pilotage comportent un circuit de détection de tension de ligne pour le contrôle de l'état de la ligne téléphonique auquel le dispositif est destiné à être raccordé;
- lesdits moyens de pilotage comportent un circuit de détection de tonalité pour le contrôle de l'état de la ligne téléphonique auquel le dispositif est destiné à être raccordé;
- les éléments de circuit de téléphonie filaire et les éléments de circuit de téléphonie sans fil comportent respectivement un circuit de composition de numéros téléphoniques commandé par les moyens de pilotage;
- il comporte en outre un circuit de détection de décroché du correspondant appelé associé aux moyens d'émission de signaux d'alarme;
- les éléments de circuit de téléphonie flaire sont intégrés à la centrale d'alarme et les moyens de télécommunication sans fil et lesdits moyens de pilotage sont disposés dans un boîtier séparé du reste du dispositif, le boîtier étant équipé de moyens de raccordement du dispositif à une prise téléphonique de la centrale d'alarme;
- les éléments de circuit de téléphonie sans fil comportent un circuit d'émulation du réseau téléphonique câblé associé à des moyens de détection de numéros téléphoniques composés par les éléments de circuit de téléphonie filaire et des moyens de composition de numéros téléphoniques sur un réseau téléphonique sans fil raccordés aux moyens de détection;
- les moyens de pilotage comportent des moyens de commande de l'alimentation des éléments de circuit de téléphonie sans fil.

L'invention a également pour objet une centrale d'alarme comprenant des moyens de détection d'intrusion et des moyens de transmission de signaux d'alarme par liaison téléphonique, caractérisée en ce que les moyens de transmission de signaux d'alarme comportent un dispositif de transmission de signaux tel que défini ci-dessus.

D'autres caractéristiques et avantages ressortiront de la description suivante, donnée uniquement à titre d'exemple et faite en référence aux dessins annexés sur lesquels:
- la figure 1 est un schéma synoptique illustrant la constitution d'un dispositif de transmission de signaux d'alarme conforme à l'invention, selon un premier exemple de réalisation ; et
- la figure 2 illustre schématiquement la structure d'un dispositif de transmission de signaux d'alarme selon un autre mode de réalisation.

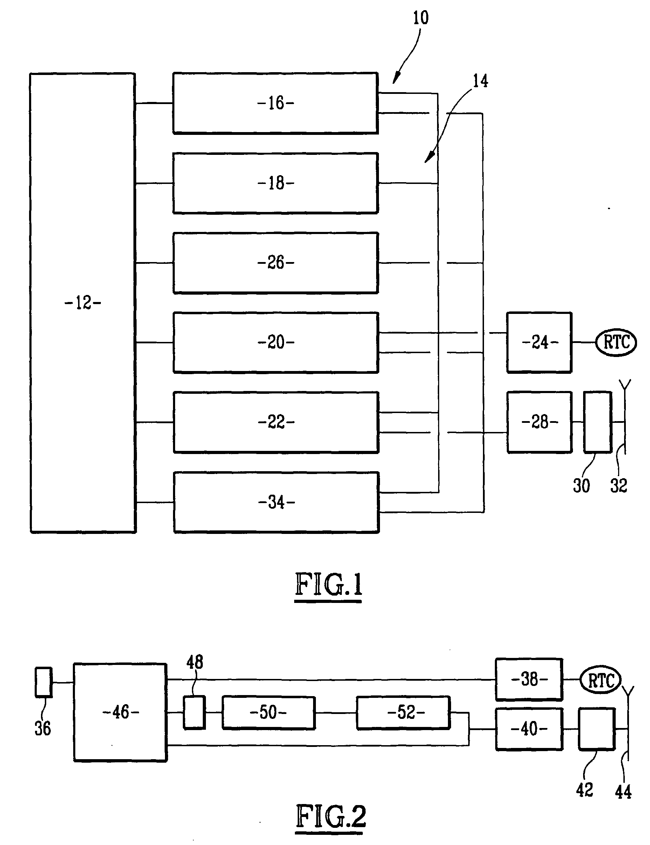

Sur la figure 1, on a représenté, de façon schématique, la structure d'un dispositif de transmission de signaux d'alarme conforme à l'invention, désigné par la référence numérique générale 10.

Il est destiné à être raccordé à une centrale d'alarme 12 d'un système d'alarme placé dans un local à surveiller.

Comme cela est classique, un ensemble de détecteurs (non représentés) sont raccordés à la centrale d'alarme 12 en vue de la détection des intrusions dans le local surveillé. Bien entendu, en variante, d'autres types de détecteurs peuvent être utilisés, par exemple, des détecteurs d'incendie.

Après détection d'une intrusion, la centrale d'alarme 12 provoque l'émission de signaux d'alarme, constitués par un message formé de signaux vocaux et/ou de signaux vidéos, et la transmission de ces signaux en direction d'un ou de plusieurs correspondants préalablement mémorisés dans la centrale d'alarme 12, par exemple une unité centrale de télésurveillance, le propriétaire du local surveillé, ... , par l'intermédiaire du dispositif 10 de transmission de signaux d'alarme.

Pour ce faire, le dispositif 10 comporte des moyens d'établissement d'une liaison téléphonique avec le ou les correspondants à appeler, désignés par la référence numérique générale 14, raccordés à la centrale d'alarme et pilotés par cette dernière.

Ces moyens 14 comportent, d'une part, les éléments de circuit de téléphonie filaire 16, 18 et 20 capables d'établir une liaison téléphonique avec le correspondant par l'intermédiaire du réseau téléphonique commuté RTC, et d'autre part, des moyens d'émission de signaux d'alarme vers le correspondant, sur la ligne téléphonique établie, constitués par un organe de lecture 22 d'un message préalablement mémorisé.

On voit sur la figure 1 que les éléments de circuit de téléphonie câblée et les moyens d'émission de signaux d'alarme, constitutifs du dispositif de transmission 10, sont raccordés au réseau téléphonique commuté RTC par l'intermédiaire d'une interface 24.

Les éléments de circuit de téléphonie câblée comportent un circuit 16 de détection de tonalité; un circuit de numérotation 18 raccordé au circuit 16 de détection de tonalité et adapté pour composer, après détection de la tonalité, le numéro téléphonique du correspondant à appeler stocké en mémoire dans la centrale d'alarme ; ainsi qu'un circuit 20 de détection de décroché du correspondant appelé, de manière à provoquer l'émission et l'envoi du message au moyen de l'organe de lecture 22, dès détection du décroché.

En variante, le circuit de détection de tonalité peut être remplacé par un circuit de détection de tension de ligne, capable de détecter à haute impédance une tension de 48V, pour contrôler l'état de la ligne téléphonique sur laquelle est branché le dispositif.

Afin d'éviter que le dispositif 10 puisse être déjoué par sectionnement de la ligne téléphonique, ce qui se traduirait par une impossibilité de transmettre les signaux d'alarme, le dispositif 10 de transmission de signaux d'alarme est pourvu de moyens de télécommunication sans fil.

Bien que ces moyens de télécommunication sans fil puissent être constitués par tout type de moyens de télécommunication capables de transmettre à distance un signal d'alarme vers un récepteur, dans l'exemple de réalisation représenté, ces moyens sont constitués par des éléments de circuit de téléphonie sans fil, c'est à dire de type "mobile".

Par élément de circuit de téléphonie sans fil ou "mobile", on entend, dans le cadre de la présente demande, des éléments de circuit de téléphonie capables d'établir une liaison téléphonique sur un réseau téléphonique sans fil ou de mobiles, par opposition au réseau téléphonique filaire ou commuté RTC, par exemple des éléments de circuit de téléphonie appartenant notamment à la norme DCS 1800 ("Digital Cellular System") ou à la norme GSM ("Global System for Mobile Communications").

Ces éléments de circuit de téléphonie sans fil comprennent un circuit de numérotation 26 raccordé à la centrale d'alarme 12 et connecté à un circuit d'interface 28, lui-même raccordé à un circuit d'émission et de réception de signaux 30, auquel est raccordée une antenne 32 disposée de préférence à l'extérieur de la centrale d'alarme 12.

Les éléments de circuit de téléphonie filaire 14 et les éléments de circuit de téléphonie sans fil 26 sont constitués par des éléments de circuit de téléphonie classiques, appropriés pour l'utilisation envisagée. Ils ne seront donc pas décrits en détail par la suite. On notera toutefois qu'ils sont respectivement capables d'établir une liaison téléphonique avec un correspondant appelé par l'intermédiaire du réseau téléphonique commuté RTC et par l'intermédiaire d'un réseau de téléphonie sans fil, également connu sous l'appellation réseau téléphonique de type "mobile" et ce, dès déclenchement d'une alarme, en vue de l'envoi du message d'alarme émis par l'organe de lecture 22.

Des moyens de pilotage provoquent l'actionnement des éléments de circuit de téléphonie sans fil 26 en cas de défaut de raccordement des éléments de circuit de téléphonie câblés 14 au réseau de téléphonie câblée, se traduisant par une absence de tonalité.

Ces moyens de pilotage comprennent le circuit de détection de tonalité ou le circuit de détection de tension de ligne 16 afin d'être en mesure de contrôler l'état de la ligne téléphonique auquel le dispositif est connecté.

Ils sont, par exemple, constitués par un commutateur associé au circuit 16 de détection de tonalité ou de tension de ligne, actionnant sélectivement l'un des circuits de numérotation 18 et 26, et ce en fonction de la présence ou de l'absence de tonalité ou de tension sur la ligne.

Le dispositif de transmission de signaux d'alarme qui vient d'être décrit fonctionne de la façon suivante.

Dès déclenchement d'une alarme, la centrale d'alarme 12 provoque un décroché et vérifie qu'une tonalité ou une tension est détectée par le circuit 16 détecteur de tonalité ou de tension de ligne.

Après détection d'une tonalité ou d'une tension sur la ligne, la centrale d'alarme 12 actionne les éléments de circuit de téléphonie filaire 18, 20 et 22 pour la composition d'un numéro téléphonique préalablement mémorisé et l'établissement d'une liaison téléphonique par l'intermédiaire du réseau téléphonique commuté. Dès détection d'un décroché, il provoque l'envoi d'un signal d'alarme sur la liaison téléphonique établie à destination du correspondant appelé.

Avantageusement, dans le cas où aucun décroché n'est détecté par le circuit 20 détecteur de décroché, la centrale d'alarme 12 provoque la composition d'un autre numéro téléphonique mémorisé, de manière à transmettre le signal d'alarme à destination d'un autre correspondant.

De préférence, après transmission du signal d'alarme, la centrale d'alarme 12 actionne un circuit d'interface 34 recevant des signaux vocaux ou vidéo en provenance d'un microphone ou de dispositifs de prise de vues équipant le local surveillé, en vue de la transmission de ces signaux vocaux ou vidéo à destination du correspondant appelé.

Dans le cas où aucune détection de tonalité ou aucune tension de ligne n'est détectée dûe, par exemple, à une coupure de la ligne téléphonique, les moyens de pilotage actionnent les éléments de circuit de téléphonie sans fil 26 de manière à provoquer l'établissement d'une liaison sans fil avec le correspondant, en vue de l'envoi vers ce dernier du signal d'alarme délivré par le circuit de lecture 22, par l'intermédiaire du réseau "mobile".

Cette liaison téléphonique est établie par composition, sur le réseau "mobile", du numéro téléphonique du correspondant à appeler. Après décroché, la centrale 12 provoque l'émission du signal d'alarme sur la liaison téléphonique ainsi établie.

Comme mentionné précédemment, en cas d'absence de décroché, la centrale d'alarme 12 peut, de façon optionnelle, provoquer la composition d'un autre numéro téléphonique mémorisé.

Ainsi, même en cas de défaut de raccordement du dispositif au réseau téléphonique commuté, il est possible de transmettre les signaux d'alarme vers un ou plusieurs correspondants prédéterminés en utilisant le réseau téléphonique "mobile".

Dans l'exemple de réalisation décrit en référence à la figure 1, le dispositif de transmission d'alarme est entièrement intégré au système d'alarme équipant le local surveillé.

Il est également possible, en variante, et comme représenté sur la figure 2, de disposer les moyens de télécommunication sans fil, à savoir les éléments de téléphonie sans fil, et les moyens de pilotage de l'actionnement de ces derniers dans un boîtier séparé, les éléments de circuit de téléphonie filaire ou commutée étant intégrés au système d'alarme.

Dans ce cas, le boîtier incorporant les éléments de téléphonie sans fil est doté, d'une part, d'une prise téléphonique 36 venant se brancher sur une prise téléphonique correspondante du système d'alarme et, d'autre part, de deux interfaces 38 et 40 raccordées l'une, 38, au réseau téléphonique commuté RTC et l'autre, 40, à un circuit 42 d'émission et de réception de signaux auquel est raccordé une antenne 44, en vue de la transmission de signaux d'alarme par l'intermédiaire du réseau de type "mobile".

Comme on voit sur la figure 2, le boîtier incorpore également un circuit 46 détecteur de tonalité disposé entre la prise téléphonique et les interfaces 38 et 40 et un circuit 48 d'émulation du réseau téléphonique commuté raccordé à un circuit 50 de détection de numéros téléphoniques, lui-même raccordé à un circuit 52 de composition de numéros téléphoniques sur le réseau sans fil.

Les moyens de pilotage du fonctionnement des éléments de circuit de téléphonie sans fil, et en particulier du circuit d'émulation 48, du circuit de détection de numéros téléphoniques 50 et le circuit 52 de numérotation sont incorporés au circuit 46 de détection de tonalité.

Selon cet exemple de réalisation, le dispositif de transmission des signaux d'alarme fonctionne de la façon suivante.

Après détection d'une alarme, et comme cela est classique, le système d'alarme effectue un décroché.

Après détection de la tonalité, effectuée au moyen d'un circuit détecteur incorporé au système d'alarme, ce dernier provoque la composition du numéro téléphonique d'un correspondant à appeler.

En cas de détection d'une tonalité par le circuit de détection 46 incorporé au boîtier ou en cas de détection d'une tension de ligne, le dispositif laisse passer l'appel sans modification sur le réseau téléphonique RTC.

Si aucune tonalité n'est détectée, les moyens de pilotage incorporés au circuit de détection 46 effectuent une commutation de manière à raccorder les éléments de circuit de téléphonie sans fil à la prise téléphonique 36. Dans ce cas, la détection de tonalité s'effectue sur le réseau de type "mobile".

Après détection d'une tonalité par le circuit 46, le circuit d'émulation 48 et le circuit de détection de numéros récupèrent le numéro téléphonique composé, lequel numéro est à nouveau composé par le circuit de numérotation 52, de manière à établir une liaison téléphonique par l'intermédiaire du réseau "mobile".

Après détection d'un décroché par le correspondant appelé, le signal d'alarme est transmis sur le réseau "mobile".

On notera que, de préférence, les éléments de circuit de téléphonie mobile ne sont mis sous tension qu'après, détection d'une alarme, afin d'éviter que les éléments de circuit de téléphonie ne soient en permanence localisés et enregistrés dans le réseau mobile.

Pour ce faire, les moyens de pilotage de l'actionnement des éléments de circuit de téléphonie sans fil incorporent des moyens de commande de leur alimentation afin de les alimenter en cas d'absence de tonalité ou de tension de ligne ou en cas d'émission d'une alarme par la centrale 12.

Cette disposition facilite ainsi la création, par les opérateurs de télécommunication, d'une offre commerciale adaptée, c'est à dire d'un abonnement réduit.

Comme dans l'exemple de réalisation décrit précédemment en référence à la figure 1, le dispositif de transmission de signaux d'alarme représenté sur la figure 2 est capable de transmettre les signaux d'alarme soit sur le réseau téléphonique commuté, soit, en cas de défaut de raccordement du dispositif à ce réseau RTC, par l'intermédiaire du réseau de type "mobile".

Il présente toutefois l'avantage de pouvoir être connecté à tout type de centrale d'alarme dotée d'une prise téléphonique.

## Revendications

1. Dispositif de transmission de signaux d'alarme, comprenant des éléments de circuit de téléphonie filaire (14, 16, 18, 20) adaptés pour l'établissement d'une liaison téléphonique avec un correspondant par l'intermédiaire d'un réseau téléphonique filaire (RTC), des moyens (22) d'émission de signaux d'alarme vers le correspondant sur la ligne téléphonique établie, des moyens (26, 28, 30, 32 ; 40, 42, 44, 48, 50, 52) de télécommunication sans fil et des moyens (16 ; 46) de pilotage de l'actionnement desdits moyens (26, 28, 30, 32 ; 40, 42, 44, 48, 50) de télécommunication sans fil en cas de défaut de raccordement du dispositif au réseau téléphonique filaire, en vue de l'envoi des signaux d'alarme vers le correspondant, caractérisé en ce que les éléments (14, 16, 18, 20) de circuit de téléphonie filaire sont intégrés à la centrale d'alarme, les moyens de télécommunication (40, 42, 44, 48, 50, 52) sans fil et lesdits moyens de pilotage (46) étant disposés dans un boîtier séparé du reste du dispositif, ledit boîtier étant équipé de moyens (36) de raccordement du dispositif à une prise téléphonique de la centrale d'alarme, et en ce que les éléments de circuit de téléphonie sans fil comportent un circuit (48) d'émulation du réseau téléphonique câblé associé à des moyens (50) de détection de numéros téléphoniques composés par les éléments de circuit de téléphonie filaire et des moyens (52) de composition de numéros téléphoniques sur un réseau téléphonique sans fil, raccordés aux moyens (50) de détection.

2. Dispositif selon la revendication 1, caractérisé en ce que lesdits moyens de pilotage comportent un circuit (16 ; 46) de détection de tonalité pour le contrôle de l'état de la ligne téléphonique auquel le dispositif est destiné à être raccordé.

3. Dispositif selon la revendication 1, caractérisé en ce que lesdits moyens de pilotage comportent un circuit de détection de tension de ligne pour le contrôle de l'état de la ligne téléphonique auquel le dispositif est destiné à être raccordé.

4. Dispositif selon l'une quelconque des revendications 1 à 3, caractérisé en ce que lesdits moyens de télécommunication comportent des éléments (26, 28, 30, 32 ; 40, 42, 44, 48, 50) de circuit de téléphonie sans fil.

5. Dispositif selon la revendication 4, caractérisé en ce que les éléments (14, 16, 18, 20) de circuit de téléphonie filaire et les éléments (26, 28, 30, 32 ; 40, 42, 44, 48, 50, 52) de circuit de téléphonie sans fil comportent respectivement un circuit (18, 26 ; 52) de composition de numéros téléphoniques commandé par les moyens de pilotage.

6. Dispositif selon l'une quelconque des revendications 1 à 5, caractérisé en ce qu'il comporte en outre un circuit (20) de détection de décroché du correspondant appelé associé aux moyens (22) d'émission de signaux d'alarme.

7. Dispositif selon l'une quelconque des revendications 4 à 6, caractérisé en ce que les moyens de pilotage (16 ; 46) comportent des moyens de commande de l'alimentation des éléments (26, 28, 30, 32 ; 40, 42, 44, 48, 50) de circuit de téléphonie sans fil.

8. Centrale d'alarme comprenant des moyens de détection d'intrusion et les moyens de transmission de signaux d'alarme par liaison téléphonique, caractérisé en ce que les moyens de transmission de signaux d'alarme comportent un dispositif (10) de transmission de signaux selon l'une quelconque des revendications 1 à 7.
